# EUROPEAN PATENT APPLICATION

(11) **EP 1 911 730 A2**
(43) Date of publication of application: **16.04.2008**
(21) Application number: 07118406.3
(22) Date of filing: 12.10.2007
(51) Int. Cl.: C04B 28/02, C04B 14/06, C04B 24/26

(54) **Improved Jointing Sand Composition and Method**

(30) Priority: 13.10.2006 GB 0620282
(71) Applicant: Resiblock Limited, Basildon, Essex SS13 1DW (GB)
(72) Inventor: Amor, Craig Victor, Benfleet, Essex SS7 1QQ (GB); Lamparter, Paul Christopher, Leigh-on-Sea, Essex SS9 1NJ (GB)
(74) Representative: Walder, Jeremy Thomas

(57) **Abstract**

An improved jointing sand composition and method are provided to enhance the stability of block paving applications. The dry, non-asphaltic composition comprises dried sand or silicates, a water-soluble polymer, and cement. Block paving joints are filled with the dry powdered composition, following which water is applied to promote curing of the composition. Upon evaporation of water, the composition sets to provide a stable material which is resistant to the absorption or permeation of further water, and cannot be rehydrated.

## Description

This invention relates to improved jointing sand compositions for use in block paving applications, and methods of stabilising block paving utilising such compositions.

The terms "block paving", "paving blocks" and variations thereof as used herein should be interpreted in their broadest sense to encompass substantially all modular constructions of pavements and paved areas including, but not limited to: paths, driveways, forecourts and patios; and substantially all forms of paver units, including, but not limited to: concrete blocks, clay blocks, concrete slabs or flags, natural stone flags, cobbles and bricks. The present invention has however been developed particularly for use with concrete slabs or flags and concrete or clay blocks for the domestic or "DIY" market, and will therefore be described herein with particular emphasis on this application.

When installing block paving, for example as part of a patio or path, conventional construction practice is to lay paving blocks adjacent one another, and then to fill the joints between the paving blocks with kiln dried sand - often referred to as joint filling sand or jointing sand. The sand is then compacted into the joints by mechanical vibration. This provides structural stability to the paved area, and is generally referred to as "interlock" since it effectively binds a plurality of individual paving blocks together to function as a single entity.

Over time, jointing sand can become eroded from the joints, for example as a result of the action of wind, rainwater, pressure washing, vacuum sweeping or vehicular movement over the paved area. This causes the interlock between the paving blocks to be lost, thus reducing structural stability and allowing the paving blocks to move independently of one another. This can result in chipping, spalling and ultimately structural failure. Eroded block paving joints may additionally be susceptible to weed growth, particularly where the paved area is not regularly used by either pedestrian or vehicular traffic, whilst a more serious problem is posed by the infiltration of rainwater into the joints. The invading water can eventually enter the subgrade beneath the paved area, which is generally formed of bedding sand. This will ultimately result in liquefaction and degradation of the subgrade, again resulting in structural failure.

The use of cement-containing compositions for joint filling in block paving applications has long been considered undesirable, because of the permanence and inflexibility of the bond formed by cement on setting. Any subsequent movement of individual paving blocks, or the subgrade, can then cause cracking. Cementitious compositions for use in block paving have been described, for example in JP 2,285,103, JP 10,265,251 and US 5,244,304, but they have not found favour in the paving construction industries. This is because, in addition to the disadvantages outlined above, the compositions described in these references are unsatisfactory since their quick setting properties make spillages difficult to clean up leading to potential staining or other damage to paving blocks. The materials are also provided in paste form making them difficult and messy to apply.

Attempts to solve the problem of jointing sand being eroded from block paving have therefore tended to focus on the use of non-cementitious compositions, either mixed with the sand prior to joint filling, or applied as a sealing layer on top of the sand, following filling.

Such non-cementitious compositions are described, for example, in DE 4,421,970, WO 00/50,355 and WO 97/07,303. These references disclose mixtures of liquid polybutadiene, a flow enhancer and dry particulate material such as sand, crushed glass or fine aggregate. These mixtures are advantageous in that they are relatively easy to handle and do not adhere to paving slabs or the like when spilled thereon. However, the mixtures are designed to set upon exposure to air or oxygen, which can make handling difficult and mean that the mixtures require careful storage.

Furthermore, flow enhancers generally contain environmentally-unfriendly organic solvents which can leach into paving blocks resulting in an aesthetically undesirable effect known as "picture framing". Such compositions also tend not to exhibit good mechanical adhesion properties with respect to the vertical face of the paving blocks. This can result in the free flow of water to the subgrade below, potentially contributing to structural failure.

Non-cementitious mixtures of dried sand with water-soluble polymers are described in GB 2,381,529 and GB 2,398,791. These compositions are adapted to be cured by reaction with water, rather than air, enabling the composition to be applied to the joints as a dry powder, and then cured by the addition and evaporation of water. However, the cured compositions are susceptible to re-hydration when brought into contact with water, for example as a result of heavy precipitation or pressure washing. This can allow water to penetrate between the cured material and the vertical face of the paving unit, which over time can lead to picture framing, and ultimately to structural failure once the cured material becomes re-hydrated to such an extent that invading water reaches the subgrade.

The present invention seeks to address the problem of jointing sand being eroded from block paving by providing an improved cementitious jointing sand composition, curable by the application of water, which avoids the pitfalls traditionally associated with cementitious compositions in that the cured material exhibits a degree of flexibility to prevent cracking, and in that the composition can be applied as a dry powder rather than a paste. The present invention also seeks to provide a jointing sand composition which exhibits superior performance over known non-cementitious compositions in that it does not produce "picture framing" effects and is resistant to post-curing re-hydration.

As a result of the above properties it is envisaged that compositions according to the present invention will be suitable for use in climates of constant or severe precipitation, in applications where the paving is subjected to large volumes or flows of water (e.g. car washes) and will enable cleaning by jet or pressure washing. It is envisaged that the compositions will be suitable for both rigid and flexibly laid block paving, and for use on slopes and gradients.

According to a first aspect of the present invention there is provided a dry, non-asphaltic composition for filling joints between paving blocks, said composition comprising the following components:
(A) dried sand or silicates;
(B) a water-soluble polymer; and
(C) cement.

Preferably, components (B) and (C) are finely powdered or granulated, and are homogeneously dispersed throughout a matrix formed by component (A). The entire composition can thus be provided as a substantially dry powder or granulated material.

Component (A) preferably comprises, and most preferably consists of, kiln dried sand. The kiln dried sand is preferably graded to British Standard BS 7533, Part 3.

The mass of component (A) preferably constitutes in the range of from 70% to 97.3%, and most preferably in the range of from 85% to 92%, of the total mass of the composition.

Component (B) preferably comprises, and most preferably consists of, a water-soluble polymer selected from urea-formaldehyde resins, acetate-ethylene co-polymers, and polyvinyl acetates. Suitable urea-formaldehyde resins, preferably having low formaldehyde emulsion with hardener and extender incorporated, are exemplified by such products as PROTAK® UF200, supplied by Protak (GB) Ltd. of Bicester, Oxon., UK. Suitable acrylic powder, acetate-ethylene co-polymers are exemplified by such products as ROCKBOND® polymer RBPP57, supplied by Rockbond SCP Ltd. of Sudbury, Suffolk, UK. Suitable polyvinyl acetates are exemplified by such products as ELOTEX® FX 2300, supplied by National Starch and Chemical Company of Bridgewater, NJ, USA.

It should be appreciated that there are likely to be many other water-soluble polymers available in the UK and worldwide which will prove just as suitable for incorporation into a composition according to the present invention. The selection of the polymer component (B) for any given application will ultimately be determined by the solubility of the polymer in water, and the degree to which it interacts with the cement component (C), for example by promoting or inhibiting the rate of curing.

The mass of component (B) preferably constitutes at least 2%, more preferably in the range of from 2% to 20%, and most preferably in the range of from 6% to 10%, of the total mass of the composition.

Component (C) preferably comprises, and most preferably consists of, Portland cement, being a mixture comprising calcium silicates, sulphates, ferroaluminates and aluminates. Portland cement may optionally further comprise naturally quarried lime, magnesia and chlorides.

The mass of component (C) preferably constitutes in the range of from 0.7% to 10%, and most preferably in the range of from 2% to 5% of the total mass of the composition.

The ratio of the mass of component (B) in the composition relative to the mass of component (C) in the composition preferably remains constant as the mass of one of said components is varied. The aforesaid ratio is preferably in the range of from 2:1 to 3:1, and most preferably in the range of from 2.3:1 to 2.9:1.

According to a second aspect of the present invention there is provide a method of stabilising a plurality of paving blocks laid adjacent to one another and having joints therebetween, comprising filling said joints with a dry non-asphaltic composition comprising the following components: (A) dried sand or silicates; (B) a water-soluble polymer; and (C) cement; and subsequently applying water to promote curing of the composition.

The preferred features as hereinbefore described with reference to the composition according to the first aspect of the present invention apply equally to the use of such compositions in the method according to the second aspect of the present invention.

The addition of water causes the polymer component (B) to dissolve, and creates a suspension of the cement component (C). As both components (B) and (C) are homogeneously dispersed throughout the matrix of component (A) when in dry powder form, this results in the dried sand or silicates component (A) becoming coated with the dissolved and suspended components (B) and (C). Evaporation of the water added to the joint then causes the composition to set.

Following curing, the set composition remains stable, even under domestic pressure washing, and resists the absorption or permeation of water via the filled joint. The composition cannot be re-hydrated, either accidentally or deliberately, by the addition of water. It is believed that block paving joints stabilised with an improved jointing sand composition according to the present invention are rendered less susceptible to water permeation than a traditionally mortared joint. This is, in part, attributable to the setting of the entirety of the composition in the joint, from the top to the base of the paving blocks.

Examples of preferred compositions according to the first aspect of the present invention are shown in Table I below:

**Table I**

| (mass / kg) | Example I | Example II | Example III |
|---|---|---|---|
| Kiln Dried Sand | 18.2 | 18.2 | 18.2 |
| ELOTEX® FX 2300 | 1.27 | - | - |
| PROTAK® UF200 | - | 1.35 | - |
| ROCKBOND® RBPP57 | - | - | 1.31 |
| Portland Cement | 0.55 | 0.47 | 0.51 |

The compositions of Examples I, II and III as shown above, are each applied to block paving joints in a dry powdered or granulated form. The composition is swept over the surface of the paved area so as to fill all of the joints, and may be compacted by mechanical vibration. The compositions will not set until such time as water is applied and therefore can safely be exposed to air without setting, making storage and handling easier. Any loose or unwanted material should be thoroughly swept from the surface of the paved area before adding water to promote curing of the composition. Water may be applied by way of a watering can with a rose attachment, a hosepipe, or other suitable means. The applied water is then allowed to evaporate naturally, causing the composition to set.

The application of the composition according to the first aspect of the present invention to block paving joints by the method according to the second aspect of the present invention may be carried out either when laying new block paving, or to stabilise an existing paved area.

## Claims

1. A dry, non-asphaltic composition for filling joints between paving blocks, said composition comprising the following components:
(A) dried sand or silicates;
(B) a water-soluble polymer; and
(C) cement.

2. A composition as claimed in claim 1, wherein components (B) and (C) are finely powdered and/or granulated, and are homogeneously dispersed in a matrix formed by component (A).

3. A composition as claimed in claim 1 or claim 2, wherein:
- component (A) comprises kiln dried sand; and/or
- component (B) comprises a water-soluble polymer selected from urea-formaldehyde resins, acetate-ethylene co-polymers, and polyvinyl acetates; and/or
- component (C) comprises Portland cement, being a mixture of calcium silicates, sulphates, ferroaluminates and aluminates, and optionally further comprises naturally quarried lime, magnesia and chlorides.

4. A composition as claimed in any of the preceding claims wherein the ratio of the mass of component (B) in the composition relative to the mass of component (C) in the composition is in the range of from 2:1 to 3:1, preferably from 2.3:1 to 2.9:1.

5. A composition as claimed in any of the preceding claims wherein the mass of component (B) constitutes at least 2% of the total mass of the composition.

6. A composition as claimed in any of the preceding claims wherein:
- the mass of component (A) constitutes in the range of from 70% to 97.3%, preferably 85% to 92%, of the total mass of the composition;
- the mass of component (B) constitutes in the range of from 2% to 20%, preferably 6% to 10%, of the total mass of the composition; and
- the mass of component (C) constitutes in the range of from 0.7% to 10%, preferably 2% to 5% of the total mass of the composition.

7. A composition as claimed in any of the preceding claims wherein:
- component (A) comprises kiln dried sand and constitutes substantially 91% of the total mass of the composition;
- component (B) comprises polyvinyl acetates and constitutes substantially 6% of the total mass of the composition; and
- component (C) comprises Portland cement and constitutes substantially 3% of the total mass of the composition.

8. A composition as claimed in any of claims 1 to 6, wherein:
- component (A) comprises kiln dried sand and constitutes substantially 91% of the total mass of the composition;
- component (B) comprises urea-formaldehyde resins and constitutes substantially 7% of the total mass of the composition; and
- component (C) comprises Portland cement and constitutes substantially 2% of the total mass of the composition.

9. A composition as claimed in any of claims 1 to 6, wherein:
- component (A) comprises kiln dried sand and constitutes substantially 91% of the total mass of the composition;
- component (B) comprises acetate-ethylene co-polymers and constitutes substantially 6.5% of the total mass of the composition; and
- component (C) comprises Portland cement and constitutes substantially 2.5% of the total mass of the composition.

10. A method of stabilising a plurality of paving blocks laid adjacent to one another and having joints therebetween, comprising filling said joints with a dry composition as claimed in any of the preceding claims, and subsequently applying water to promote curing of the composition.
